# EUROPÄISCHE PATENTSCHRIFT

(11) **EP 2 321 160 B1**
(45) Veröffentlichungstag und Bekanntmachung des Hinweises auf die Patenterteilung: **07.12.2011**
(21) Anmeldenummer: 09781549.2
(22) Anmeldetag: 06.08.2009
(51) Int. Cl.: B60S 1/40, B60S 1/38

(54) **VORRICHTUNG ZUM GELENKIGEN VERBINDEN EINES WISCHBLATTS MIT EINEM WISCHARM EINES SCHEIBENWISCHERS**
DEVICE FOR THE ARTICULATED CONNECTION OF A WIPER BLADE TO A WIPER ARM OF A WINDSHIELD WIPER
DISPOSITIF DE LIAISON ARTICULÉE ENTRE UN BALAI D ESSUIE-GLACE ET UN BRAS D ESSUIE-GLACE

(30) Priorität: 11.09.2008 DE 102008041996
(43) Veröffentlichungstag der Anmeldung: 18.05.2011
(73) Patentinhaber: Robert Bosch GmbH, 70442 Stuttgart (DE)
(72) Erfinder: WESTERMANN, Klaus-Juergen, 76332 Bad Herrenalb (DE); GEPPERT, Bernhard, 76137 Karlsruhe (DE)
(86) Internationale Anmeldenummer: PCT/EP2009/060193
(87) Internationale Veröffentlichungsnummer: WO 2010/028918

(56) Entgegenhaltungen:
- EP-A2- 1 911 641
- WO-A1-2005/102802
- WO-A1-2006/106006

## Beschreibung

### Stand der Technik

Die Erfindung geht von einer Vorrichtung nach dem Oberbegriff des Anspruchs 1 aus.

Aus der DE 10 2005 016 486 A1 ist eine gattungsbildende Vorrichtung mit den Merkmalen nach Anspruch 1 bekannt. Die Vorrichtung umfasst ein als Blechkralle ausgebildetes Anschlusselement, das mit seinen am Boden der Blechkralle angeformten Klauen ein Tragelement in Form zweier Federschienen seitlich umfasst. Das Anschlusselement besitzt Seitenwände, die vom Boden zum Wischarm hin abgewinkelt sind und zwischen sich einen Gelenkbolzen tragen, der mit Bolzenköpfen in den Seitenwänden vernietet ist.

Die Vorrichtung umfasst ferner einen Adapter, dessen äußere Seitenwände mit ihren Innenseiten an Außenseiten der Seitenwände des Anschlusselements anliegen, während innere Seitenwände sich an den Innenseiten der Seitenwände des Anschlusselements abstützen. Die inneren und äußeren Seitenwände einer Längsseite des Adapters sind durch eine Deckwand miteinander verbunden. An dem zum freien Ende des Adapters weisenden Ende befindet sich eine zum Gelenkbolzen hin offene Nabe, mit der der Adapter auf den Gelenkbolzen geklippst werden kann, wobei die Bolzenköpfe in Lageröffnungen einrasten, die in den Au-βenwänden des Adapters vorgesehen sind. Zum antriebsseitigen Ende des Anschlusselements versetzt, sind an den inneren Seitenwänden des Adapters Federzungen angeformt, die schräg nach außen geneigt sind und durch Durchbrüche in den Seitenwänden des Anschlusselements und Lücken in den äußeren Seitenwänden greifen und mit Halteelementen an einem Verbindungselement des Wischarms zusammenwirken.

Das Verbindungselement ist fest mit dem Wischarm verbunden, z.B. indem es einstückig an diesem angeformt ist. Das Verbindungselement hat einen im Wesentlichen u-förmigen Querschnitt, wobei an den freien Längskanten der Seitenwände die Halteelemente angeordnet sind. Die Seitenwände sind durch eine Deckwand miteinander verbunden, in der sich eine Rastöffnung für eine Taste befindet. Das Verbindungselement wird über den Adapter geschoben, wobei die Federzungen hinter die Halteelemente gedrückt werden und die Taste, die ebenfalls an einer Federzunge angeordnet sein kann, in die Öffnung der Deckwand des Verbindungselements einrastet.

### Offenbarung der Erfindung

Nach der Erfindung besitzt der Adapter mindestens ein erstes Adapterelement und ein zweites Adapterelement, wobei das erste Adapterelement die inneren und äußeren Seitenwände aufweist, von denen die inneren Seitenwände über einen Boden und ein mit Abstand dazu verlaufendes Anlageteil miteinander fest verbunden sind. Das Anlageteil besitzt eine Außenkontur, die sowohl zur Aufnahme eines hakenförmigen Endes des Wischarms als auch zur Aufnahme eines zweiten Adapterelements geeignet ist, an dem die Federtaste angeordnet ist. Durch die erfindungsgemäße Ausgestaltung des mehrteiligen Adapters ist es möglich, Wischarme, die unterschiedliche Enden oder Verbindungselemente haben, mit einem gleichen Wischblatt zu verbinden, und zwar einen Wischarm nach dem eingangs beschriebenen Stand der Technik oder einen Wischarm mit einem hakenförmigen Ende. Im letzten Fall wird das zweite Adapterelement entfernt, wobei das hakenförmige Ende des Wischarms die Stelle des zweiten Adapterelements einnimmt. Dabei ist vorteilhaft, dass die inneren Seitenwände des ersten Adapterelements gegenüber dem Anlageteil einen Überstand aufweisen, der zur seitlichen Führung des hakenförmigen Endes des zweiten Adapterelements bzw. des Wischarms dient.

Für die Verbindung mit Wischarmen, die unterschiedlich gebogene hakenförmige Enden besitzen, wird gemäß einer Ausgestaltung der Erfindung vorgeschlagen, dass das Anlageteil an seinem abgerundeten Ende für das hakenförmige Ende einen quer verlaufenden Spalt besitzt. Wenn das hakenförmige Ende einen größeren Bogen besitzt, kann der untere Schenkel des hakenförmigen Endes zwischen den Boden und das Anlageteil des Anschlusselements greifen, während bei einem kleineren Bogen der untere Schenkel des hakenförmigen Endes in den Spalt des Anlageteils eingreift. Die Lage zwischen dem Wischblatt und dem Wischarm bezüglich der Längsrichtung kann in üblicher Weise durch Rasthaken und Rastlöcher gesichert werden.

Das zweite Adapterelement besitzt gemäß einer Ausgestaltung der Erfindung an seinem dem Wischarm zugewandten Ende die Federtaste, während es mit seinem anderen, hakenförmigen Ende das Anlageteil umfasst. Das hakenförmige Ende des zweiten Adapterelements ist im Wesentlichen gleich gestaltet wie das hakenförmige Ende eines Wischarms, sodass es mit einer inneren Anlagefläche auf das Anlageteil des ersten Adapterelements passt und an seiner Außenseite eine äußere Lagerfläche bildet. Zur Führung des zweiten Adapterelements relativ zum ersten Adapterelement ist ein Führungssteg vorgesehen, der sich in Längsrichtung des zweiten Adapterelements erstreckt und in einem Führungsschlitz des Anlageteils des ersten Adapterelements geführt ist. Die Nachgiebigkeit der Federtaste wird auf einfache Weise dadurch erreicht, dass zu beiden Seiten des Führungsstegs die untere Kontur des zweiten Adapterelements ausgehend von einer inneren Anlagefläche zunehmend zurückgenommen ist. Somit wird das zweite Adapterelement im Bereich der Taste vom Anlageteil des ersten Adapterelements nicht abgestützt, sodass es nachgeben kann, während das hakenförmige Ende an dem abgerundeten Teil des Anlageteils gehalten wird.

Um das zweite Adapterteil bzw. das hakenförmige Ende eines Wischarms in Längsrichtung relativ zum Wischblatt zu sichern, ist gemäß einer Ausgestaltung der Erfindung ein Rahmen vorgesehen, der einen zum Tragelement weisenden Bereich des Anschlusselements umfasst und am Anschlusselement oder am Tragelement befestigt ist. Der Rahmen weist in vorteilhafter Weise an seinem dem Wischarm zugewandten Ende seitliche Gelenkzapfen auf, die eine Gelenkachse bilden, und auf denen eine Verriegelungskappe gelenkig gelagert ist. In geöffneter Stellung kann das zweite Adapterelement in das erste Adapterelement eingesetzt werden oder das hakenförmige Ende des Wischarms an dem Anlageteil des ersten Adapterelements gelagert werden. In geschlossener Position kann sich die Außenkontur des hakenförmigen Endes der Wischstange oder des zweiten Adapterelements an einer inneren Führungsfläche an einer Stirnwand der Verriegelungskappe abstützen. Dabei ist es zweckmäßig, dass die Seitenwände der Verriegelungskappe konkave Führungskonturen aufweisen, die dem Wischarm zugewandt sind. Dadurch können die Seitenwände des eingangs erwähnten Wischarms zwangsfrei um den Gelenkbolzen schwenken.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Vorrichtung in einer Explosionsdarstellung,

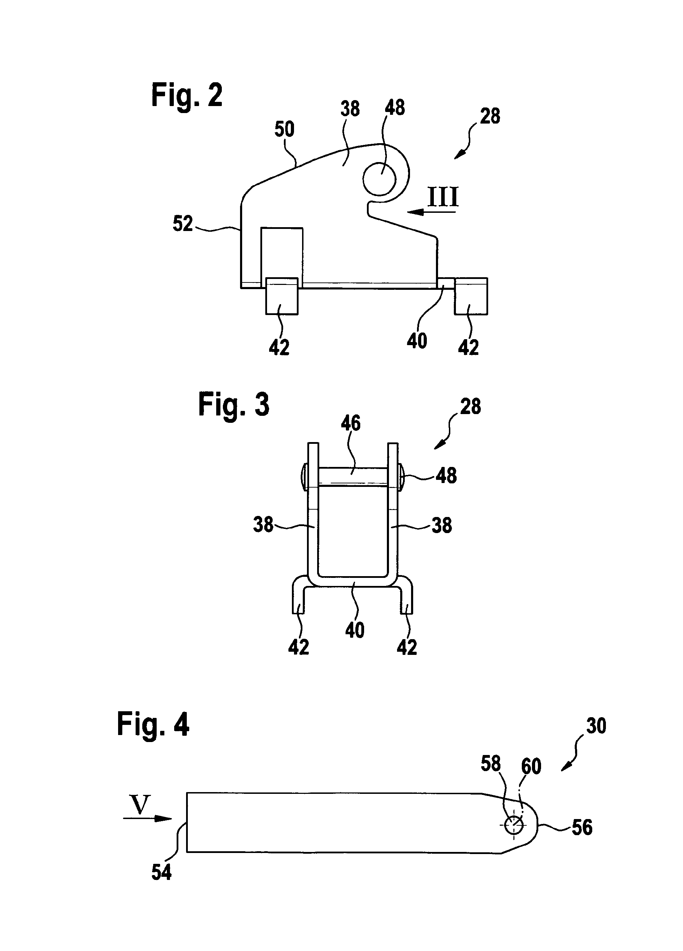

- Fig. 2: eine Seitenansicht eines Anschlusselements,
- Fig. 3: eine Ansicht in Richtung eines Pfeils III in Fig. 2,
- Fig. 4: eine Seitenansicht eines Rahmens,

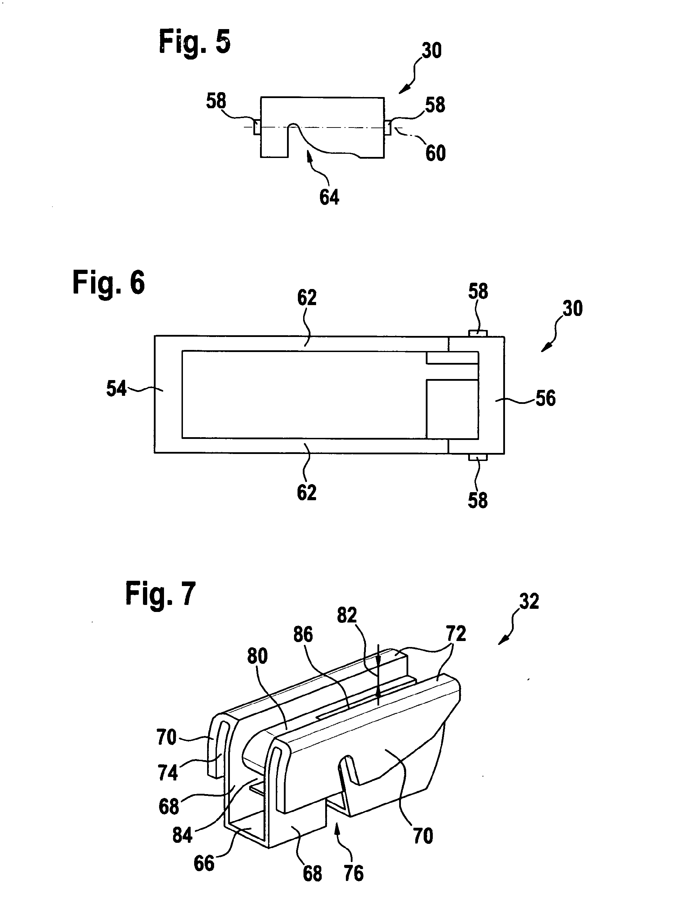

- Fig. 5: eine Ansicht in Richtung eines Pfeils V Fig. 4,
- Fig. 6: eine Draufsicht eines Rahmens nach Fig. 4,
- Fig. 7: eine perspektivische Ansicht eines ersten Adapterteils,

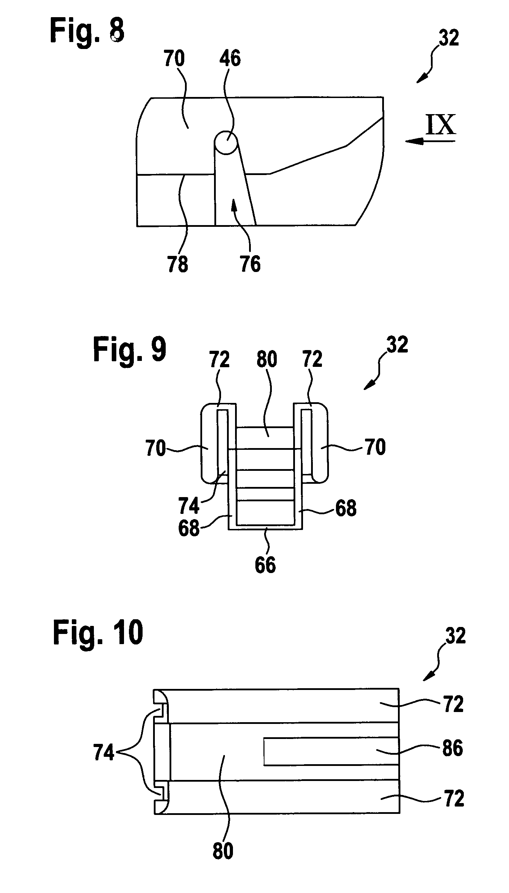

- Fig. 8: eine Seitenansicht eines ersten Adapterteils,
- Fig. 9: eine Ansicht eines ersten Adapterteils in Richtung eines Pfeils IX in Fig. 8,
- Fig. 10: eine Draufsicht eines ersten Adapterteils,

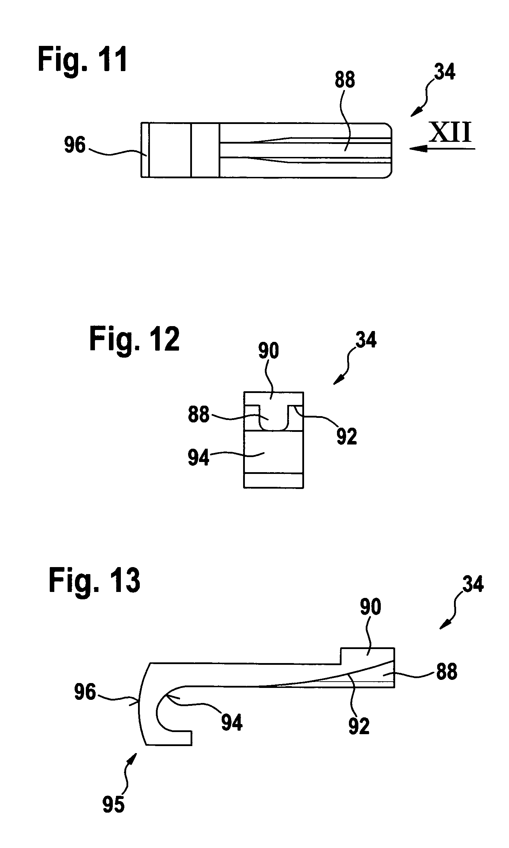

- Fig. 11: eine Ansicht von unten eines zweiten Adapterteils,
- Fig. 12: eine Ansicht eines zweiten Adapterteils in Richtung eines Pfeils XII in Fig. 11,
- Fig. 13: eine Seitenansicht eines zweiten Adapterteils,

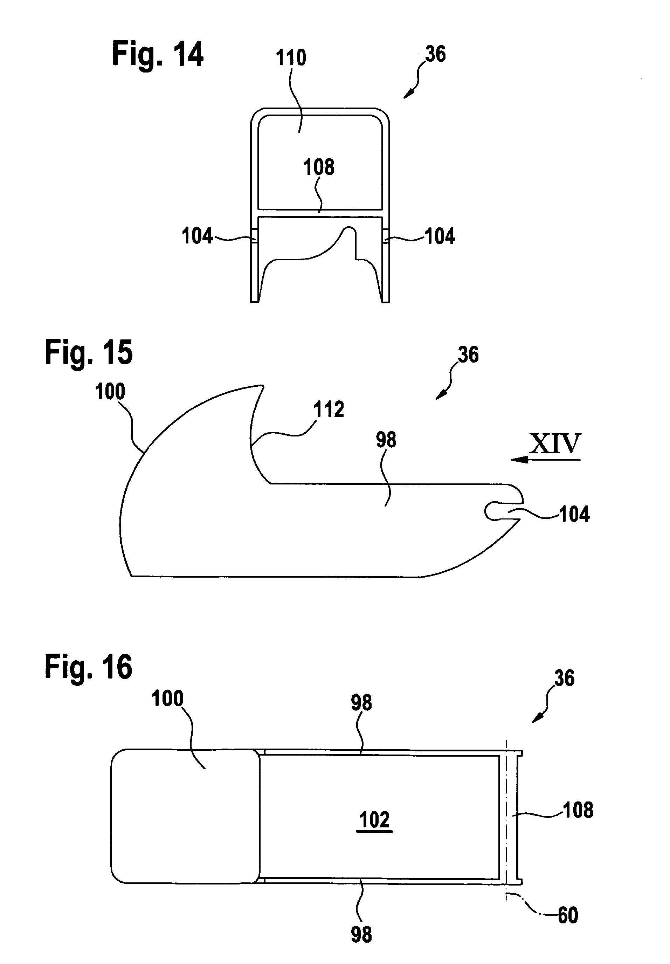

- Fig. 14: eine Ansicht einer Verriegelungskappe in Richtung eines Pfeils XIV in Fig. 15,
- Fig. 15: eine Seitenansicht einer Verriegelungskappe,
- Fig. 16: eine Draufsicht einer Verriegelungskappe nach Fig. 15,
- Fig. 17: eine perspektivische Ansicht eines Wischblatts mit einer erfindungsgemäßen Vorrichtung während der Montage mit einem Wischarm und
- Fig. 18: eine Alternative zu Fig. 17.

### Ausführungsformen der Erfindung

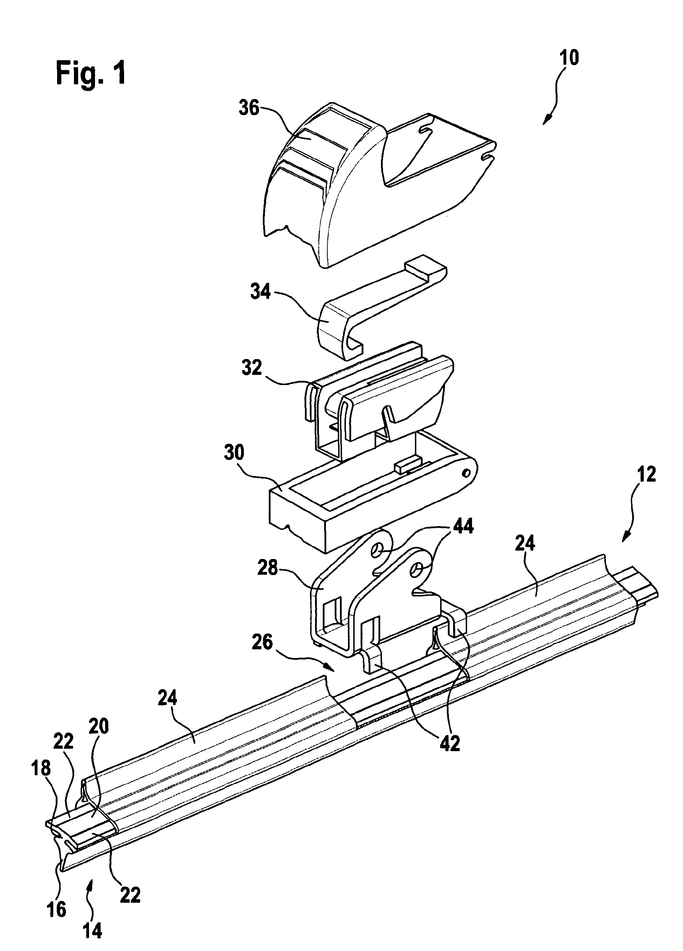

Fig. 1 zeigt ein Wischblatt 12 ohne Endkappen, das eine Wischleiste 14 mit einer Wischlippe 16 besitzt. Diese ist über einen Kippsteg 18 mit einer Kopfleiste 20 verbunden. In der Kopfleiste 20 sind zwei seitliche Längsnuten vorgesehen, in die als Tragelement 22 zwei Federschienen eingesetzt sind, die ein Stück weit aus den Längsnuten seitlich vorstehen. Im mittleren Bereich des Tragelements 22 ist ein Anschlusselement 28 in Form einer Blechkralle befestigt. In Längsrichtung zu beiden Seiten des Anschlusselements 28 sind auf dem Tragelement 22 Spoilerteile 24 befestigt, die zwischen sich ein Fenster 26 für das Anschlusselement 28 bilden.

Das Anschlusselement 28 besitzt einen parallel zum Tragelement 22 verlaufenden Boden 40, von dem aus zwei Seitenwände 38 entgegengesetzt zur Wischleiste 14 etwa senkrecht abgewinkelt sind. Aus Teilen der Seitenwände 38 sind Klauen 42 geformt und zum Tragelement 22 hin abgewinkelt. Sie umfassen in montiertem Zustand das Tragelement 22 seitlich und von unten. In den Seitenwänden 38 sind einander gegenüberliegende Öffnungen 44 für einen Gelenkbolzen 46 vorgesehen, der mit Bolzenköpfen 48 in den Öffnungen 44 fest genietet ist. Eine Oberkante 50 der Seitenwände 38 fällt von einem höchsten Punkt im Bereich der Öffnungen 44 zu einer vorderen Stirnkante 52 ab.

Das Anschlusselement 28 wird im Bereich seinen Bodens 40 von einem Rahmen 30 umfasst, der mit Anschlussprofilen 64 in seiner Frontwand 54 und seiner antriebsseitigen Wand 56 an die Spoilerteile 24 anschließt und entweder am Anschlusselement 28 oder am Tragelement 22 z.B. durch Klippsen befestigt werden kann. Der Rahmen 30 besitzt an den Außenseiten seiner Seitenwände 62 im Bereich der antriebsseitigen Wand 56 Gelenkzapfen 58, die eine Schwenkachse 60 bilden. Auf den Gelenkzapfen 58 ist eine Verriegelungskappe 36 um die Schwenkachse 60 schwenkbar gelagert.

Mit dem Anschlusselement 28 ist ein erstes Adapterelement 32 gelenkig verbunden. Das Anschlusselement 28 besitzt einen mit Abstand parallel zum Boden 40 des Anschlusselements 28 verlaufenden Boden 66, an dessen Längsseiten parallel zu den Seitenwänden 38 des Anschlusselements 28 verlaufende innere Seitenwände 68 und äußere Seitenwände 70 vorgesehen sind. Die inneren Seitenwände 68 sind mit den äußeren Seitenwänden 70 an den dem Boden 66 abgewandten Kanten durch Rücken 72 verbunden, sodass zwischen der inneren Seitenwand 68 und der äußeren Seitenwand 70 ein Zwischenraum 74 gebildet wird, in den jeweils eine Seitenwand 38 des Anschlusselements 28 passt. Im Abstand zum Boden 66 sind die inneren Seitenwände 68 durch ein Anlageteil 80 miteinander verbunden. Das Anlageteil 80 verläuft etwa parallel zum Boden 66 und besitzt eine zum Boden 66 hin offene Nabe 76, mit der das erste Adapterelement 32 auf den Gelenkbolzen 46 des Anschlusselements 28 geklippst werden kann. Die inneren Seitenwände 68 haben ferner zum Anlageteil 80 einen Überstand 82, der zur seitlichen Führung eines zweiten Adapterteils 34 dient, das das zur vorderen Stirnkante 52 des Anschlusselements 28 weisende, abgerundete Ende des Anlageteils 80 mit einem hakenförmigen Ende 95 umfasst, wobei eine innere Anlagefläche 94 des zweiten Adapterelements 34 an dem Anlageteil 80 anliegt.

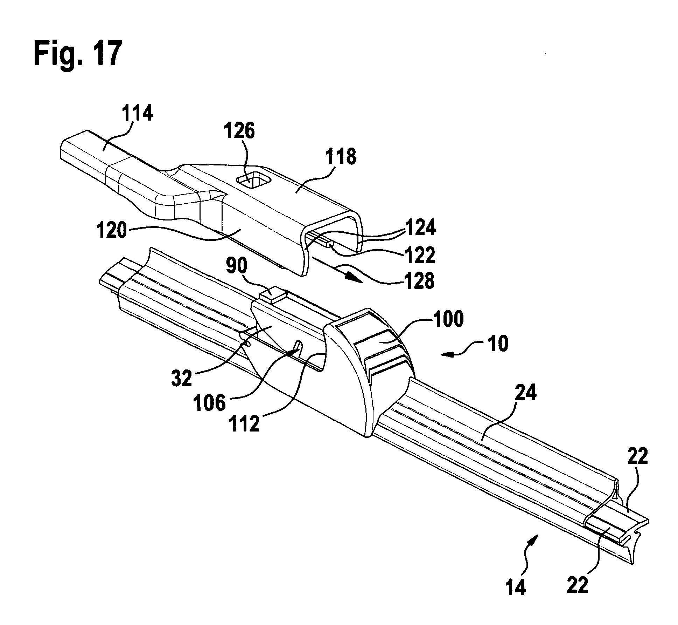

An dem entgegengesetzten Ende besitzt das zweite Adapterelement 34 einen in Längsrichtung verlaufenden Führungssteg 88, der in einen entsprechenden Führungsschlitz 86 im Anlageteil 80 des ersten Adapterelements 32 passt. Zu beiden Seiten des Führungsstegs 88 ist die innere Anlagefläche 94 entsprechend einer konvexen, unteren Kontur 92 zurückgenommen, sodass sich in diesem Bereich das zweite Adapterelement 34 nicht am Anlageteil 80 abstützen kann, sondern elastisch federnd nachgibt. An diesem Ende besitzt das zweite Adapterelement 34 eine Federtaste 90, die in montiertem Zustand über die Rücken 72 des ersten Adapterelements 32 vorsteht, sodass ein Wischarm 114 in der Ausführung nach Fig. 17 mit einem Rastloch 126 in seiner Deckwand 118 mit der Federtaste 90 verrasten kann.

Zur Sicherung des zweiten Adapterelements 34 relativ zum ersten Adapterelement 32 bzw. eines hakenförmigen Endes 134 einer Wischstange 132 relativ zum ersten Adapterelement 32 dient die Verriegelungskappe 36, die mittels zweier offener Naben 104 in ihren Seitenwänden 98 auf die Gelenkzapfen 58 des Rahmens 30 geklippst werden kann. In geöffnetem Zustand, wenn die Verriegelungskappe 36 eine Stellung etwa senkrecht zum Wischblatt 12 einnimmt, kann das zweite Adapterelement 34 eingesetzt werden bzw. das hakenförmige Ende 134 in Richtung des Pfeils 128 montiert werden. Hierzu dient ein Freiraum 102 zwischen den Seitenwänden 98 und einer Stirnwand 100 sowie einer Querstrebe 108, die zur Querversteifung im Bereich der offenen Naben 104 die Seitenwände 98 gegenseitig abstützt. Im geschlossenen Zustand umfasst die Stirnwand 100 mit ihrer inneren, gewölbten Führungsfläche 110 das hakenförmige Ende 95 des zweiten Adapterelements 34 bzw. das hakenförmige Ende 134 des Wischarms 132, sodass die Bewegung in Längsrichtung durch die Führungsfläche 110 der Verriegelungskappe 36 begrenzt wird, indem sich eine äußere Lagerfläche 96 des zweiten Adapterelements 34 bzw. die Außenseite eines Bogens 136 zwischen einem oberen Schenkel 138 und einem unteren Schenkel 140 des hakenförmigen Endes 134 an der Führungsfläche 110 abstützt.

Ist das zweite Adapterelement 34 montiert (Fig. 17), kann der Wischarm 114 in Richtung des Pfeils 128 über das erste Adapterelement 32 geschoben werden. Dabei umfassen die Seitenwände 120 am Ende des Wischarms 114, die durch die Deckwand 118 miteinander verbunden sind und an ihren unteren Kanten Führungsrippen 122 besitzen, die äußeren Seitenwände 70 des ersten Adapterteils 32. Zu diesem Zweck sind die äußeren Seitenwände 70 in Richtung auf das Tragelement 22 kürzer als die inneren Seitenwände 68, und der Abstand ihrer Unterkante 78 vom Boden 66 nimmt entgegengesetzt zur Richtung des Pfeils 128 zu. Im montierten Zustand, wenn die Federtaste 90 in das Rastloch 126 eingerastet ist, liegt die Deckwand 118 an den Rücken 72 des ersten Adapterelements 32 an, während sich die Führungsrippen 122 an dem parallel zu den Rücken 72 verlaufenden Bereich der Unterkante 78 abstützen. Um eine Schwenkbewegung zwischen dem Wischarm 114 und der Verriegelungskappe 36 zu ermöglichen, ohne einen zu großen Spalt zwischen diesen Teilen vorzusehen, sind die Stirnkanten 124 der Seitenwände 120 entsprechend einer Führungskontur 112 der Verriegelungskappe 36 ausgebildet.

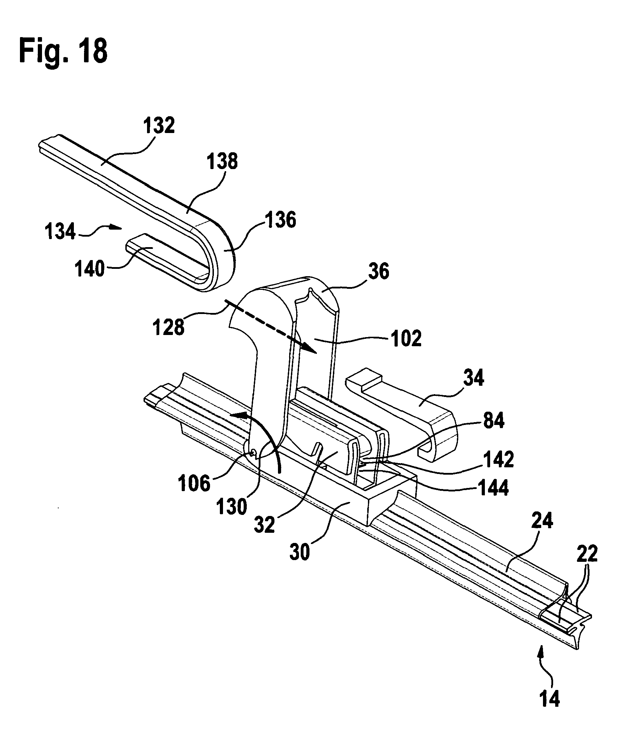

Wird der Wischarm 132 mit einem hakenförmigen Ende 134 (Fig. 18) montiert, wird die Verriegelungskappe 36 in Richtung des Pfeils 130 geöffnet und der Wischarm 132 mit seinem hakenförmigen Ende 134 durch den Freiraum 102 in Richtung des Pfeils 128 geschoben und am Anlageteil 80 gelagert. Dabei stützt sich der obere Schenkel 138 an der Oberseite des Anlageteils 80 ab, während der untere Schenkel 140 in einen Zwischenraum 144 zwischen dem Boden 66 und dem Anlageteil 80 eingreift. Wird ein Wischarm 132 mit einem kleineren Bogen 136 verwendet, kann der untere Schenkel 140 in einen Spalt 84 eingreifen, der am abgerundeten Ende des Anlageteils 80 vorgesehen ist. Dabei kann der zum Boden 66 weisende Teil des Anlageteils 80 als Federzunge 142 ausgebildet sein und zusätzlich zur Sicherung des hakenförmigen Endes 134 dienen, indem sie mit einem nicht dargestellten Rastnocken in eine entsprechende Rastöffnung des unteren Schenkels 140 eingreift.

## Patentansprüche

1. Vorrichtung (10) zum gelenkigen Verbinden eines Wischblatts (12) mit einem Wischarm (114, 132), wobei die Vorrichtung (10) ein mit einem Tragelement (22) des Wischblatts (12) fest verbundenes Anschlusselement (28) umfasst, das auf jeder Längsseite ausgehend von einem Boden (40) eine zum Wischarm (114, 132) abgewinkelte Seitenwand (38) aufweist, die einen Gelenkbolzen (46) trägt auf dem ein Adapter (32, 34) schwenkbar gelagert ist, der auf jeder Längsseite mit einer inneren Seitenwand (68) und einer äußeren Seitenwand (70) die Seitenwand (38) des Anschlusselements (28) umfasst und an seiner dem Wischarm (114) zugewandten Seite eine Federtaste (90) sowie im Bereich seiner Seitenwände (68, 70) Führungs- und Haltemittel (78) für den Wischarm (114, 132) aufweist, **dadurch gekennzeichnet, dass** der Adapter (32, 34) mindestens ein erstes Adapterelement (32) und ein zweites Adapterelement (34) besitzt, wobei das erste Adapterelement (32) die inneren und äußeren Seitenwände (68, 70) aufweist, von denen die inneren Seitenwände (68) über einen Boden (66) und ein mit Abstand dazu verlaufendes Anlageteil (80) miteinander fest verbunden sind, wobei das Anlageteil (80) eine Außenkontur besitzt, die sowohl zur Aufnahme eines hakenförmigen Endes (134) des Wischarms (132) als auch zur Aufnahme eines zweiten Adapterelements (34) geeignet ist, an dem die Federtaste (90) angeordnet ist.

2. Vorrichtung (10) nach Anspruch 1, **dadurch gekennzeichnet, dass** das erste Adapterelement (32) mit einer zum Boden (66) hin offenen Nabe (76) auf den Gelenkbolzen (46) geklippst werden kann.

3. Vorrichtung (10) nach Anspruch 1 oder 2, **dadurch gekennzeichnet, dass** die inneren Seitenwände (68) gegenüber dem Anlageteil (80) einen Überstand (82) aufweisen, der zur seitlichen Führung des hakenförmigen Endes (95, 134) des zweiten Adapterelements (34) bzw. des Wischarms (114) dient.

4. Vorrichtung (10) nach Anspruch 3, **dadurch gekennzeichnet, dass** das Anlageteil (80) an seinem abgerundeten Ende für das hakenförmige Ende (95, 134) einen quer verlaufenden Spalt (84) besitzt.

5. Vorrichtung (10) nach einem der vorhergehenden Ansprüche, **dadurch gekennzeichnet, dass** die innere Seitenwand (68) durch einen Rücken (72) mit der äußeren Seitenwand (70) verbunden ist, wobei die äußere Seitenwand (70) in Richtung zum Tragelement (22) kürzer ausgeführt ist und eine Unterkante (78) besitzt.

6. Vorrichtung (10) nach Anspruch 5, **dadurch gekennzeichnet, dass** die Unterkante (78) im Bereich der offenen Nabe (76) parallel zum Boden (66) verläuft und sich zum wischarmseitigen Ende des ersten Adapterelements (32) in einer konvexen Kontur dem Rücken (72) nähert.

7. Vorrichtung (10) nach einem der vorhergehenden Ansprüche, **dadurch gekennzeichnet, dass** das zweite Adapterelement (34) an seinem dem Wischarm (114) zugewandten Ende die Federtaste (90) aufweist, während es mit seinem anderen, hakenförmigen Ende (134) das Anlageteil (80) umfasst.

8. Vorrichtung (10) nach Anspruch 7, **dadurch gekennzeichnet, dass** das zweite Adapterelement (34) im Bereich der Federtaste (90) einen Führungssteg (88) aufweist, der in einem Führungsschlitz (86) des Anlageteils (80) des ersten Adapterelements (32) geführt ist.

9. Vorrichtung (10) nach Anspruch 8, **dadurch gekennzeichnet, dass** die untere Kontur (92) des zweiten Adapterelements (34) zu beiden Seiten des Führungsstegs (88) ausgehend von einer inneren Anlagefläche (94) zunehmend zurückgenommen ist.

10. Vorrichtung (10) nach einem der vorhergehenden Ansprüche, **dadurch gekennzeichnet, dass** ein Rahmen (30) einen zum Tragelement (22) weisenden Bereich des Anschlusselements (28) umfasst und am Anschlusselement (28) oder am Tragelement (22) befestigt ist.

11. Vorrichtung (10) nach Anspruch 10, **dadurch gekennzeichnet, dass** der Rahmen (30) an seinem dem Wischarm (114, 132) zugewandten Ende seitliche Gelenkzapfen (58) besitzt, die eine Gelenkachse (60) bilden und auf denen eine Verriegelungskappe (36) gelenkig gelagert ist.

12. Vorrichtung (10) nach Anspruch 11, **dadurch gekennzeichnet, dass** die Verriegelungskappe (36) mit offenen Naben (104) auf die Gelenkzapfen (58) geklippst ist.

13. Vorrichtung (10) nach einem der Ansprüche 11 oder 12, **dadurch gekennzeichnet, dass** an dem den Gelenkzapfen (58) abgewandten Ende die Verriegelungskappe (36) eine Führungsfläche (110) aufweist, die im geschlossenen Zustand der Verriegelungskappe (36) die axiale Bewegung des zweiten Adapterelements (34) bzw. des hakenförmigen Endes (134) des Wischarms (132) relativ zum ersten Adapterelement (32) begrenzt.

14. Vorrichtung (10) nach einem der Ansprüche 11 bis 13, **dadurch gekennzeichnet, dass** die Seitenwände (98) der Verriegelungskappe (36) konkave Führungskonturen (112) aufweisen, die dem Wischarm (114) zugewandt sind.

15. Wischblatt (12) **gekennzeichnet durch** Anwendung einer Vorrichtung (10) nach einem der vorhergehenden Ansprüche.

## Claims

1. Device (10) for the articulated connection of a wiper blade (12) to a wiper arm (114, 132), wherein the device (10) comprises a connecting element (28) which is fixedly connected to a supporting element (22) of the wiper blade (12) and, on each longitudinal side starting from a base (40), has a side wall (38) which is angled with respect to the wiper arm (114, 132) and supports a hinge pin (46) on which an adapter (32, 34) is pivotably mounted, said adapter, on each longitudinal side, surrounding the side wall (38) of the connecting element (28) by means of an inner side wall (68) and an outer side wall (70), and, on the side thereof facing the wiper arm (114), having a spring button (90) and, in the region of the side walls (68, 70) thereof, having guiding and holding means (78) for the wiper arm (114, 132), **characterized in that** the adapter (32, 34) has at least one first adapter element (32) and one second adapter element (34), the first adapter element (32) having the inner and outer side walls (68, 70), of which the inner side walls (68) are fixedly connected to one another via a base (66) and a bearing part (80) running at a distance thereto, the bearing part (80) having an outer contour which is suitable both for receiving a hook-shaped end (134) of the wiper arm (132) and for receiving a second adapter element (34) on which the spring button (90) is arranged.

2. Device (10) according to Claim 1, **characterized in that** the first adapter element (32) can be clipped onto the hinge pin (46) by means of a hub (76) which is open towards the base (66).

3. Device (10) according to Claim 1 or 2, **characterized in that** the inner side walls (68) have an excess length (82) in relation to the bearing part (80), the excess length serving for the lateral guidance of the hook-shaped ends (95, 134) of the second adapter element (34) and of the wiper arm (114), respectively.

4. Device (10) according to Claim 3, **characterized in that** the rounded end of the bearing part (80) has a transversely running gap (84) for the hook-shaped end (95, 134).

5. Device (10) according to one of the preceding claims, **characterized in that** the inner side wall (68) is connected to the outer side wall (70) by a top surface (72), the outer side wall (70) being designed to be shorter in the direction of the supporting element (22) and having a lower edge (78).

6. Device (10) according to Claim 5, **characterized in that** the lower edge (78) runs parallel to the base (66) in the region of the open hub (76) and, at the wiper-arm end of the first adapter element (32), approaches the top surface (72) in a convex contour.

7. Device (10) according to one of the preceding claims, **characterized in that** that end of the second adapter element (34) which faces the wiper arm (114) has the spring button (90) while the other, hook-shaped end (134) of the adapter element surrounds the bearing part (80).

8. Device (10) according to Claim 7, **characterized in that**, in the region of the spring button (90), the second adapter element (34) has a guide web (88) which is guided in a guide slot (86) of the bearing part (80) of the first adapter element (32).

9. Device (10) according to Claim 8, **characterized in that** the lower contour (92) of the second adapter element (34) is increasingly set back from an inner bearing surface (94) on both sides of the guide web (88).

10. Device (10) according to one of the preceding claims, **characterized in that** a frame (30) surrounds a region of the connecting element (28), which region faces the supporting element (22), and is fastened to the connecting element (28) or to the supporting element (22).

11. Device (10) according to Claim 10, **characterized in that** that end of the frame (30) which faces the wiper arm (114, 132) has lateral pivots (58) which form a pivot axis (60) and on which a locking cap (36) is mounted in an articulated manner.

12. Device (10) according to Claim 11, **characterized in that** the locking cap (36) is clipped by means of open hubs (104) onto the pivots (58).

13. Device (10) according to either of Claims 11 and 12, **characterized in that**, at the end facing away from the pivots (58), the locking cap (36) has a guide surface (110) which, in the closed state of the locking cap (36), delimits the axial movement of the second adapter element (34) and of the hook-shaped end (134) of the wiper arm (132) relative to the first adapter element (32).

14. Device (10) according to one of Claims 11 to 13, **characterized in that** the side walls (98) of the locking cap (36) have concave guiding contours (112) which face the wiper arm (114).

15. Wiper blade (12), **characterized by** use of a device (10) according to one of the preceding claims.

## Revendications

1. Dispositif (10) pour la liaison articulée d'un balai d'essuie-glace (12) à un bras d'essuie-glace (114, 132), le dispositif (10) comprenant un élément de raccordement (28) raccordé fixement à un élément porteur (22) du balai d'essuie-glace (12), lequel élément de raccordement présente, sur chaque côté longitudinal, une paroi latérale (38) partant d'un fond (40) et coudée par rapport au bras d'essuie-glace (114, 132), qui porte un boulon d'articulation (46) sur lequel est monté de manière pivotante un adaptateur (32, 34), qui entoure, sur chaque côté longitudinal, par une paroi latérale intérieure (68) et une paroi latérale extérieure (70), la paroi latérale (38) de l'élément de raccordement (28), et qui présente, sur son côté tourné vers le bras d'essuie-glace (114), une touche à ressort (90), ainsi que dans la région de ses parois latérales (68, 70), des moyens de guidage et de retenue (78) pour le bras d'essuie-glace (114, 132), **caractérisé en ce que** l'adaptateur (32, 34) possède au moins un premier élément adaptateur (32) et un deuxième élément adaptateur (34), le premier élément adaptateur (32) présentant les parois latérales intérieures et extérieures (68, 70), dont les parois latérales intérieures (68) sont connectées fixement l'une à l'autre par le biais d'un fond (66) et d'une pièce d'appui (80) s'étendant à distance de celui-ci, la pièce d'appui (80) présentant un contour extérieur qui est approprié à la fois pour recevoir une extrémité en forme de crochet (134) du bras d'essuie-glace (132) et pour recevoir un deuxième élément adaptateur (34), sur lequel est disposée la touche à ressort (90).

2. Dispositif (10) selon la revendication 1, **caractérisé en ce que** le premier élément adaptateur (32) peut être enclipsé avec un moyeu (76) ouvert vers le fond (66) sur le boulon d'articulation (46).

3. Dispositif (10) selon la revendication 1 ou 2, **caractérisé en ce que** les parois latérales intérieures (68) présentent, par rapport à la pièce d'appui (80), un rehaussement (82) qui sert au guidage latéral de l'extrémité en forme de crochet (95, 134) du deuxième élément adaptateur (34) ou du bras d'essuie-glace (114).

4. Dispositif (10) selon la revendication 3, **caractérisé en ce que** la pièce d'appui (80) possède, à son extrémité arrondie pour l'extrémité en forme de crochet (95, 134), une fente (84) s'étendant transversalement.

5. Dispositif (10) selon l'une quelconque des revendications précédentes, **caractérisé en ce que** la paroi latérale intérieure (68) est connectée par un dos (72) à la paroi latérale extérieure (70), la paroi latérale extérieure (70) étant réalisée plus courte dans la direction de l'élément porteur (22) et possédant une arête inférieure (78).

6. Dispositif (10) selon la revendication 5, **caractérisé en ce que** l'arête inférieure (78) s'étend dans la région du moyeu ouvert (76) parallèlement au fond (66) et se rapproche de l'extrémité, du côté du bras d'essuie-glace, du premier élément adaptateur (32) dans un contour convexe du dos (72).

7. Dispositif (10) selon l'une quelconque des revendications précédentes, **caractérisé en ce que** le deuxième élément adaptateur (34) présente, sur son extrémité tournée vers le bras d'essuie-glace (114), la touche à ressort (90) tandis qu'il entoure la pièce d'appui (80) avec son autre extrémité (134) en forme de crochet.

8. Dispositif (10) selon la revendication 7, **caractérisé en ce que** le deuxième élément adaptateur (34) présente dans la région de la touche à ressort (90) une nervure de guidage (88) qui est guidée dans une fente de guidage (86) de la pièce d'appui (80) du premier élément adaptateur (32).

9. Dispositif (10) selon la revendication 8, **caractérisé en ce que** le contour inférieur (92) du deuxième élément adaptateur (34) est de plus en plus en retrait vers les deux côtés de la nervure de guidage (88) à partir d'une surface d'appui intérieure (94).

10. Dispositif (10) selon l'une quelconque des revendications précédentes, **caractérisé en ce qu'**un cadre (30) entoure une région de l'élément de raccordement (28) tournée vers l'élément porteur (22), et est fixé sur l'élément de raccordement (28) ou sur l'élément porteur (22).

11. Dispositif (10) selon la revendication 10, **caractérisé en ce que** le cadre (30) possède, sur son extrémité tournée vers le bras d'essuie-glace (114, 132) des tourillons d'articulation (58) qui forment un axe d'articulation (60) et sur lesquels est monté, de manière articulée, un capuchon de verrouillage (36).

12. Dispositif (10) selon la revendication 11, **caractérisé en ce que** le capuchon de verrouillage (36) est enclipsé avec des moyeux ouverts (104) sur les tourillons d'articulation (58).

13. Dispositif (10) selon l'une quelconque des revendications 11 ou 12,
**caractérisé en ce que** le capuchon de verrouillage (36), au niveau de l'extrémité opposée aux tourillons d'articulation (58), présente une surface de guidage (110) qui, dans l'état fermé du capuchon de verrouillage (36), limite le mouvement axial du deuxième élément adaptateur (34) ou de l'extrémité en forme de crochet (134) du bras d'essuie-glace (132) par rapport au premier élément adaptateur (32).

14. Dispositif (10) selon l'une quelconque des revendications 11 à 13, **caractérisé en ce que** les parois latérales (98) du capuchon de verrouillage (36) présentent des contours de guidage concaves (112) qui sont tournés vers le bras d'essuie-glace (114).

15. Balai d'essuie-glace (12) **caractérisé par** l'utilisation d'un dispositif (10) selon l'une quelconque des revendications précédentes.
